# EUROPEAN PATENT SPECIFICATION

(11) **EP 2 347 565 B1**
(45) Date of publication and mention of the grant of the patent: **17.07.2019**
(21) Application number: 09785586.0
(22) Date of filing: 07.09.2009
(51) Int. Cl.: H04L 12/58, H04L 29/06, H04L 29/08, H04M 3/42, H04W 4/02, G06Q 10/10

(54) **MOBILE COMMUNICATIONS METHODS AND ASSOCIATED SYSTEMS**
MOBILE KOMMUNIKATIONSVERFAHREN UND ZUGEHÖRIGE SYSTEME
PROCÉDÉS DE COMMUNICATION MOBILE ET SYSTÈMES ASSOCIÉS

(30) Priority: 05.09.2008 GB 0816287
(43) Date of publication of application: 27.07.2011
(73) Proprietor: Vodafone Group PLC, Newbury Berkshire RG14 2FN (GB)
(72) Inventor: DEBNEY, Charles, Berkshire RG17 9UP (GB); GORDON, Sheila, Berkshire RG14 1PG (GB); ELMS, Benjamin, Hampshire SO23 0JX (GB); BRYANT, Christopher, Hampshire SO17 3RG (GB)
(74) Representative: Boult Wade Tennant LLP
(86) International application number: PCT/GB2009/051127
(87) International publication number: WO 2010/026430

(56) References cited:
- EP-A- 1 648 144
- US-A1- 2006 041 648

## Description

The present invention relates to a mobile telecommunications system and associated techniques. More particularly, the present invention relates to a system and method for facilitating communications using presence attributes.

### Field of the Invention

Modern communications is currently one of the fastest evolving technologies, particularly in regard to advancements made in transitioning users from communicating via wired telephones in fixed locations, to communicating via mobile handsets in mobile telecommunications networks. The actual location of the users communicating is now unimportant in terms of receiving and initiating communications; provided a user's handset is within range of a mobile base station of an appropriate network, communications are possible.

Mobile devices are in turn becoming more and more advanced, providing users with not just the ability to communicate wirelessly, but with additional services and functions such as instant text messaging and mobile internet access.

The advent of mobile telecommunications has created its own problems however, particularly in regard to the appropriateness of one user to try to contact another. Although people generally keep their personal mobile device in their vicinity at all times, it will not always be appropriate for them to receive a call from another person. For instance, the intended recipient may be in a meeting, asleep or driving a vehicle and unable or unwilling to answer their telephone. Various measures have been devised to address such a problem, such as blocking incoming calls and implementing "silent" and "meeting" modes for the device, in order to make incoming communications non-intrusive or at least less likely to disturb. However, users do not always remember to switch their devices over to such modes, particularly when they are busy or, for instance, regularly transiting from being contactable to non-contactable for whatever reason.

From the caller's point of view, they are completely unaware of the user's circumstances, and hence ignorant of the undesirable situation they may be causing.

These problems are particularly manifested when a user travels overseas to a different time zone. A caller may be made aware that the party they are calling is overseas, by their telecommunications service provider providing the caller a different calling tone, but unaware of whether a difference in time zone exists such that their call is likely to be unappreciated by the called party.

It has been proposed in 3GPP TS 23.141 to allow a particular user's device to provide other parties with "presence attributes" allowing the other parties to see the particular user's status, such as that they are willing to take a call or are busy. In a networked computing sense, this approach is similar to that utilised by the MSN Messenger™ product.

Whilst this provides other parties with greater awareness of the particular user's status, there is a need for improved information delivery. For instance, MSN Messenger, in particular, assumes "instant" communication is required, which is not always appropriate or desirable.

Further, it is also desirable for all users concerned to have a simple and user-friendly graphical user interface (GUI). The increase of available information inevitably leads to a more crowded and convoluted display of information. It is desirable that each user is presented with data that is easy to comprehend, and that the data is appropriate to them, particularly in regard to their job at hand, or situation, at any given point in time.

In the prior art, EP1648144 discloses a presence system which uses predefined communication preferences, namely a preferred language, media type or protocol for deciding how a presence watcher should contact a presentity. US2006/041648 discloses a technique of determining an appropriate approach for a first person to communicate with a second person, taking into account factors relating to the first person and the second person per se.

### Summary of the Invention

The invention is set out in the appended independent claims. According to a first aspect the present invention provides, in mobile telecommunications network including a plurality of user devices each configured to communicate across the network via at least one mode of communication, a method of a first user device obtaining a suitability indicator regarding the suitability of at least one mode of communication with another user device, the method comprising: determining first contextual information in relation to the first user device, wherein the first contextual information is determined from at least one of the following types of information: network availability for the first user device; a capability of the first user device based on a device type of the first user device; determining second contextual information in relation to the other user device, wherein the second contextual information is determined from at least one of the following types of information: network availability for the second user device; a capability of the second user device based on a device type of the first user device; and for each of the at least one mode of communication, determining the suitability indicator using the first and second contextual information, such that by using the contextual information for both the first user device and the other user device, a suitable mode of communication between them can be determined.

According to a second aspect the present invention provides a presence client manager configured for use with a first device communicable with a mobile telecommunications network, the presence client manager including: a database of users associated with a user of the first device; a processing engine configured to determine first contextual information relating to the first device, wherein the first contextual information is determined from at least one of the following types of information: network availability for the first user device; a capability of the first user device based on a device type of the first user device; an interface configured to receive second contextual information relating to another user device of an associated user, wherein the second contextual information is determined from at least one of the following types of information: network availability for the other user device; a capability of the other user device based on a device type of the other user device; and the processing engine is further configured to determine a suitability indicator for at least one mode of communication between the first device and the other device, using the first and second contextual information, such that by using the contextual information for both the first user device and the other user device, a suitable mode of communication between them can be determined.

By utilising contextual information from each user in a communication, or a proposed communication, it is possible to provide an enhanced interface and user experience. Previous arrangements have only been able to utilise information relating to one of the parties, specifically the called party, and the "contextual" information that has been available has been limited. The present invention has expanded on the meaning of "contextual" information to not only cover information regarding the user's status, but also information regarding the user's location, current activity, phone/terminal specifications/capabilities, network capabilities for the user's current location and/or current phone/terminal status (e.g. based on battery status).

In this way, by using information from both parties, suitable means of communication between the parties can be determined, and notified to one or more of the parties in order to improve the chances of a successful communication attempt.

### Brief Description of the Drawings

Figure 1 illustrates a mobile telecommunications network useful in explaining the operation of the embodiments of the invention;
Figure 2 illustrates a sequence of menus and submenus that may be used to present information according to an embodiment of the invention;
Figure 3 illustrates the sequence of menus and submenus for demonstrating a further example of the Figure 2 embodiment of the invention;
Figure 4 shows an architectural view of the operation of the invention; and

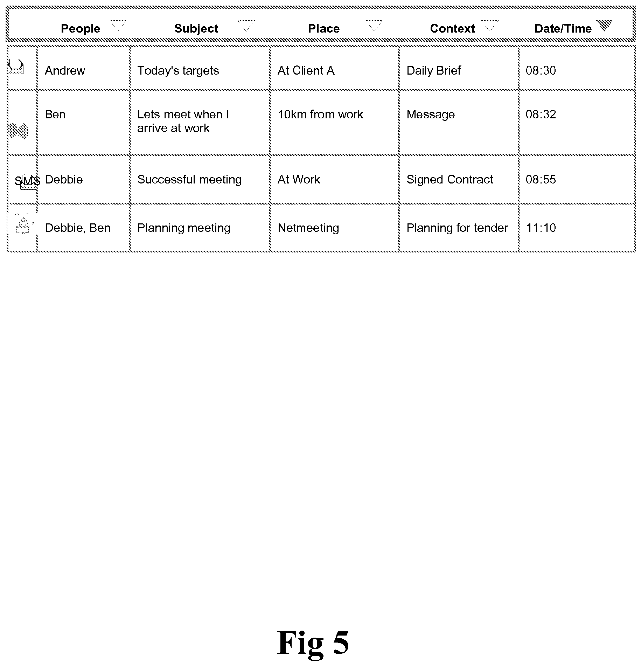

Figure 5 illustrates a communication log that may be used to present information according to a further embodiment of the invention.

### Detailed Description

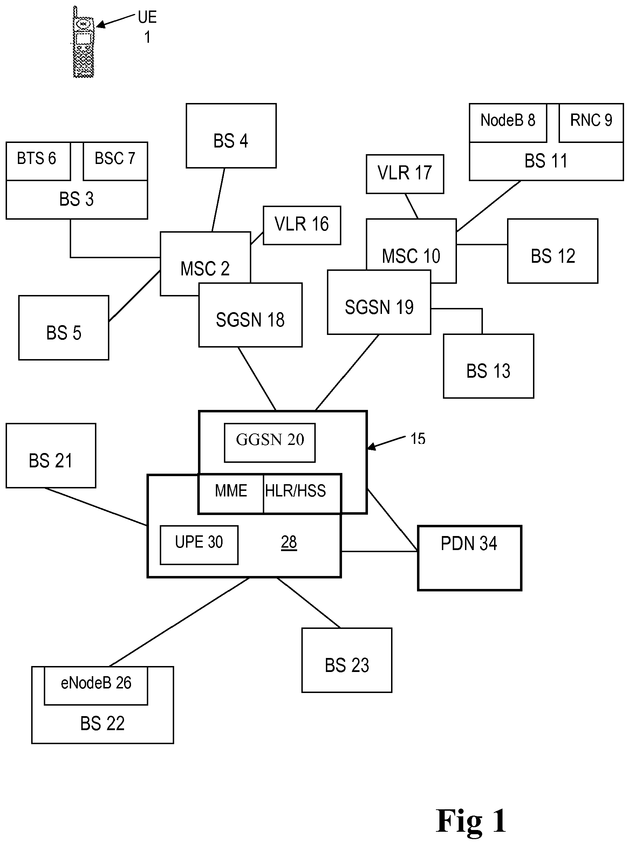

Key elements of a mobile telecommunications network, and its operation, will now briefly be described with reference to Figure 1. Figure 1 incorporates elements from a GSM network, a UMTS network and an LTE network. These are just examples of a network environment within which the present invention may be implemented, and other network formats are possible.

Each base station (BS) in the network serves a respective cell of its cellular or mobile telecommunications network and receives calls from and transmits calls to a mobile device in that cell by wireless radio communication in one or both of the circuit switched or packet switched domains. Such a subscriber's mobile device (UE) is shown at 1. The mobile device may be any form of mobile communications device, including a handheld mobile telephone, a personal digital assistant (PDA) or a laptop computer (e.g. a laptop equipped with a mobile telecommunications network datacard, a laptop having an attached dongle modem, or indeed a laptop with an embedded mobile telecommunications network modem chipset).

In a GSM mobile telecommunications network, each base station includes a base transceiver station (BTS) and a base station controller (BSC). A BSC may control more than one BTS. The BTSs and BSCs comprise the radio access network.

In a UMTS mobile telecommunications network, each base station comprises a node B and a radio network controller (RNC). An RNC may control more than one node B. The node Bs and RNCs comprise the radio access network.

In the proposed LTE mobile telecommunications network, each base station comprises an eNode B. The base stations are arranged in groups and each group of base stations is controlled by a Mobility Management Entity (MME) and a User Plane Entity (UPE).

Conventionally, in a GSM/UMTS network, the base stations are arranged in groups and each group of base stations is controlled by one mobile switching centre (MSC), such as MSC 2 for base stations 3, 4 and 5. As shown in Figure 1, the network has another MSC 6, which is controlling a further three base stations 7, 8 and 9. In practice, the network will incorporate many more MSCs and base stations than shown in Figure 1. The base stations 3, 4, 5, 7, 8 and 9 each have dedicated (not shared) connection to their MSC2 or MSC6 - typically a cable connection. This prevents transmission speeds being reduced due to congestion caused by other traffic.

The MSCs 2 and 6 support communications in the circuit switched domain - typically voice calls. Corresponding SGSNs 16 and 18 are provided to support communications in the packet switched domain - such as GPRS data transmissions. The SGSNs 16 and 18 function in an analogous way to the MSCs 2 and 6. For the sake of simplicity, all future references to an MSC are also to be taken as equivalently covering an SGSN or a Node B.

Each subscriber to the network is provided with a smart card (or SIM card) which, when associated with the user's mobile device identifies the subscriber to the network. The SIM card is pre-programmed with a unique identification number, the "International Mobile Subscriber Identity" (IMSI), which is not printed on the card and is not generally known to the subscriber. The subscriber is issued with a publicly known number, that is, the subscriber's telephone number, by means of which callers initiate calls to the subscriber. This number is the MSISDN.

The network includes a home location register (HLR) 10 which, for each subscriber to the network, stores the IMSI and the corresponding MSISDN together with other subscriber data, such as the current or last known location of the subscriber's mobile device. This information is used when paging a mobile device.

The invention relates to a broad definition of "contextual information" including: i) location; ii) availability; iii) capability; iv) device specification; v) device status; and vi) network status (e.g. available bearer and/or Quality of Service, QoS). The uses of this contextual information will now be described in relation to a mobile device configured for use in a mobile telecommunications network as described above. The network further includes a network entity known as a presence server. The presence server is a network element that collects and disseminates contextual information

As is standard, current mobile devices include a graphical user interface (GUI), with icons for the user to select particular functions or fields, such as an address book, a calendar and menu defining settings for the device. The address book includes contact details for one or more entities or associated users, such as friends, acquaintances, business associates and the like. The contact details for each entity may include one or more mobile phone numbers, landline phone numbers, email addresses, website addresses, home address details and business address details, for example.

The device is configured, such as by using the principles set down in 3GPP TS 23.141 and TS 24.141, to provide one or more remotely located contacts/associated users with location information of the user's device. These technical specifications define location information based on the identity of the last known Common Gateway Interface (CGI) or Service Area Identity (SAI) and/or corresponding geographic coordinates to the presence server, which is then made available to other users.

The present embodiment of the invention may additionally or alternatively obtain positional information using the location of the base station/eNode B with which the user's mobile device is registered. Where the base station is a micro base station this information should provide location accuracy to within about 20 metres. This information can be obtained in the form of a cell ID of the serving cell, which is sent to the presence server from the network or from a presence client manager on the mobile device.

Alternatively, the handset may have a Global Positioning System (GPS) capability, or access to a GPS receiver, such as via Bluetooth [RTM] connection, from which to obtain positional information. Other approaches may also be used, for instance using "in building" localised wireless systems (i.e. short range), such as Wi-Fi, DECT, Bluetooth and near field communication (NFC) wireless systems. Wide area wireless systems, such as WiBro, WiMAX and metropolitan WiFi may also be used.

Preferably this positional information can be made available to contacts of the user, such as to contacts designated in the user's device address book. Even more preferably, the user is able to tailor which contacts in their address book are able see the positional information, and also the level of information detail able to be received by each contact and/or each group/collection of contacts.

A key feature of this embodiment of the invention involves associating the positional information with personalised user information in order to provide location information likely to be of greater use and meaning to third parties. In this way, an interrelationship between the "users" and their "locations" is created in order to enhance the usefulness of the information available. This personalisation may be performed by the presence server and/or the presence client manager on a user's mobile device.

The personalised location information may be obtained from various sources, including:
- from resources on the user's device, such as their personal calendar or diary,
- from external sources such as external databases; and/or
- from the particular user (e.g. entered manually into the mobile device via a GUI).

Each of these sources can provide a location information field with a different degree of location information about the user device, with differing degrees of contextual focus.

To manage these different location fields, the presence server and/or the presence client manager may utilise and develop a database associating locations that the user regularly visits with one or more personalised descriptions of each location.

For instance, the database may contain a list of base station identities that the user's mobile device has previously been registered with, which are cross-referenced with specific descriptions relating to the location. These specific descriptions may provide:

### (a) a personal location such as "home", "office", "parent's house" or "away from work";

The personal location descriptions would typically be entered into the database by the user, either at their own volition, or upon the presence client manager/server receiving a prompt from their mobile device's presence client manager. For instance, upon noting a cell ID which is not included in the database, and preferably a cell ID which the user has been registered with at least once before, the presence client manager may send a prompt to the user to enter a personal description of their location, if desired. Of course, since one or more base stations may serve a given location, a plurality of cell IDs may be designated as "home" etc. Also, the user may enter different personal descriptions for different contacts and/or categories of contacts.

### b) a spatial position or regional description, such as "Newbury, UK" or "Heathrow airport";

Spatial positions and areas may be obtained by the presence server and/or the presence client manager using an established database that associates certain cell IDs with popular place names, such as the name of a town (e.g. Newbury, UK), or a certain region of a town (e.g. centre of Newbury), or a place of interest (e.g. at Nelson's column, UK). The spatial area could also specify a particular country (e.g. France) or county (e.g. Berkshire) or a specific home or work area may be designated. To obtain relative spatial positions, such as "within 1km of Nelson's column", the principle of "radius around a point" is preferably used. In this regard, such a description may be used where the base station is known to be located at or very close to Nelson's column, and that base station has a radial range of 1km. Alternatively, where more precise location determination is required (e.g. 1km north of Nelson's column), GPS or triangulation via three or more proximate base stations may be used.

### (c) a vicinity, such as "near Newbury, UK";

In terms of "vicinity", the user's actual location may be specified as a relative location. For instance, an approximation of distance from a particular destination may be made, using the device's current location. This relative measurement may be made from a given third party's location (e.g. being the one who requests the information), or from a specifically designated destination. As an example, a third party could request information on how far away a particular user is from his office address. Similarly, a chronocline, which is a contour of equal time, could be used to give a time approximation based on distance (and estimated average speed), such as within an hour's drive of a particular location.

### (d) a time related description, such as in a particular time zone;

A time related description is particularly useful when a user is located in a country from which specific location information is not obtainable. In this situation, the home network provider would be aware of the country that the device is located, and therefore be able to proffer a time zone description associated with that country, including a relative time zone description, such as 5 hours ahead of GMT.

### (e) a schedule related positional description, such as in a meeting in Newbury, UK;

To obtain a schedule related location, the presence client manager is configured to access a database, such as the user's calendar to provide the necessary personalisation. For instance, if the user is scheduled to be in a meeting at client A's premises between 2pm and 4pm, the presence client manager may set this description for the user's location at the appropriate time.

In order to ensure accuracy, however, the presence client manager may first phrase an educated question to the user regarding the actual user's location. For instance, if the presence client manager notices that the user's calendar states the user should currently be in a meeting at client A's premises, then the presence client manager may present the user with the question, "Are you currently at client A's premises?", being a question that simply requires a yes/no response from the user, and accordingly a single push of a button. If the user responds with "yes", then the presence client manager may set the user's location description as "at Client A's premises". For future reference, the presence client manager may also create an entry in the user's personal database, associating the current cell ID with the description "client A's premises". Once the personalised description is in the user's personal database, then it may be extracted and utilised for all return visits by the user to that location.

Another way to ensure accuracy for schedule-based statuses is to implement an override mechanism when the schedule-based situation is in conflict with a network-determined situation. This is to take into account the fact that a user's calendars may not necessarily be up-to-date. For example, if a calendar indicates that a user should be in a meeting, but the presence network indicates that the user is in a car and is moving, then the calendar is the most likely one to be wrong. Therefore, in this situation, the network determined position takes precedence, and the user's status is set to the "in a car" situation. However, again, a question may be put to the user in order to resolve the discrepancy.

### (f) an environmental location, such as "in a car", "on the M4" or "on a train".

An "environmental" location description, may be obtained through user input, or through a device's association with a particular environmental entity, such as a particular main road (e.g. on the M4) or on a mode of transport (e.g. on a plane/train to Italy). To achieve the association with the environmental entity, a transponder may be used in the location to notify the user's mobile device of their location. For instance, trains may be fitted with transponders that provide a broadcast over a limited area. The broadcast may be as basic as "train", or more detailed such as "the 10.15am rail service from London Paddington to Newbury". The presence client manager may use this broadcast information to define the user's location, preferably for as long as the presence client manager is receiving the broadcast signal. In terms of planes, this could be implemented, where the plane has a micro-base station on board that enables telecommunications to take place whilst the aircraft is in the air, such that the presence server is able to determine the device's location due to being registered with such a special micro-base station.

These location descriptions are typically written descriptions, but they may be presented in any other form. For example, the location descriptions may also be in the form of a visual description, such as via a map indicating the user's location. This map may display a plurality of associated users, so that a person viewing the map could, for instance, determine which is the closest to a particular point. This would be useful for a team leader determining which team member to call to a job at a particular location.

In a further alternative for providing a personalised location description, the presence client manager/server has access to a database which associates certain cell IDs with one or more addresses, such as street post codes and/or geographic coordinate ranges that a particular cell ID serves. Therefore, when a user's mobile device is being served by a particular cell, the presence client manager/server accesses the database to retrieve the one or more addresses that are associated with that cell ID. Since postcodes and geographic coordinates are not necessarily meaningful to users, the presence client manager preferably seeks to provide a personalised description of the location by cross referencing the address with addresses in the user's mobile device address book, in a bid to find a match (e.g. a postcode match).

Where a match is made, the device client may then extract a description associated with the database address entry and use that description in a personalised description of the user's location. For instance, if a match is made with the address of a friend "Claire Small", the location description may state "at Claire Small's house", or "with Claire Small". Similarly the device client may use this correlated information to phrase a question to the user, such as "Are you at Claire Small's house?"

The presence client manager/server can therefore draw on available location information and create a personalised description of that location, and ideally, save the description in relation to the location for future use. Importantly the personalised descriptions can be created with minimal user input.

The invention is thus able to allow the "context" of both or all parties to be assessed and to recommend a "best" or most suitable option.

Alternatively or in addition to contextual information linking "users" with "location", contextual information in relation to availability/capability is incorporated. This further enhances the information available, by providing personalised descriptions of availability and capability, in addition to situation.

Availability and capability contextual information can be based upon various items, events and/or situations, including tasks or projects related to the user, documents relevant to the user, as well as possessions, products and resources. For instance, a user device's presence client manager may extract an appointment from a user diary/schedule on the user's device and use this information in developing an appropriate availability description for the user, such as "Busy - in a meeting in Newbury".

In a further example, the presence client manager may recognise that the user device is plugged into a hands-free car kit. As this is a strong indication that the user is driving, the terminal may choose the availability description as "Car kit enabled - voice calls only".

Contextual information may also relate to a user's device specification or status may be utilised, alternatively or in addition to other types of contextual information. For instance, if the user's device is a 2G phone, the presence client manager may notify the presence client server of this, so that associated users are notified of the communication restrictions that apply to the user. That is, since the phone is only a 2G phone, it is not capable of video conferencing.

Similarly, the presence client manager may inform the client server of the type of device upon which it is installed (e.g. make, model), and send this information to the presence client server. The presence client server would then be able to determine what capabilities the device had from this information, and notify associated users of these capabilities and/or contact-ability based upon these capabilities, where appropriate.

Contextual information may include device status so that the presence client manager may also determine the status of resources on the user's device. For instance, the presence client manager may determine that the battery of the user's device is low and/or that the memory space available is low, and notify the presence client server of such. The presence client server would therefore be able to notify associated users of these resource statuses and/or contact-ability based upon these resource statuses, where appropriate.

Contextual information relating to the network status/availability for a user's location may be utilised, alternatively or in addition to other types of contextual information. For instance if the user's presence client manager resides on a mobile device, and the device is located in an area where no 3G network coverage is available, then this information can be utilised in describing the user's capabilities. For instance, the user's presence client manager may determine this information from other components on the device, and notify the remote presence client server of such. This information may then be provided to other users, such as in a message "due to location, 3G communications, such as video conferencing unavailable". Similarly, the remote presence client server may be notified of network congestion in the area in which the user's device is located. In this situation, it may notify other users that "due to network congestion, only communication via SMS advisable".

In the invention, a presence client manager on a user device is configured to utilise contextual information (location, availability, situation information, etc.), from both the device user and associated users/contacts in order to determine the appropriateness of contacting the associated users by different means of communication. An enhanced graphical user interface may be provided which utilises the contextual status information, so that informed communication preference decisions can be made.

The presence client manager may generate a plurality of representations of the processed contextual information, for example: an indication of which means of communicating with an associated user are possible/available; which means of communicating are most appropriate to the circumstances; and/or it may determine a hierarchy of the different means of communication based upon the associated user's status, thereby ranking the available modes of communication according to predetermined criteria. For instance, if the associated user's status information indicates that they are in a meeting, then since that user is unlikely to want to be disturbed, the best means of communicating with them would be via voice mail or text message.

The presence client manager is configured to make this determination, by using a look up table defining rankings of communication modes for different status situations, and presenting the result to the device user, the result being represented as appropriate iconography on the device's GUI.

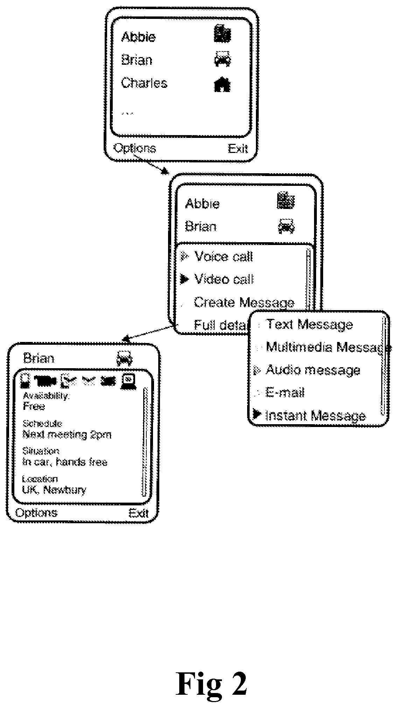

The operation of the invention may be better understood with reference to Figure 2. Here, an example showing the use of associated user status information will be described in relation to a mobile device's presence client manager. Presence client managers in this example are located on mobile devices, but they may equally be located on any network-attached communications device with access to the mobile telecommunications network, including PCs. Indeed, any or all of the determinations may be performed on a network's presence server. In this example, a first person "Andrew" wants to make contact with a second person "Brian". Figure 2 illustrates the information that Andrew's presence client manager may present to him on his mobile device regarding Brian's location, availability and/or capability (i.e. his contextual information).

The user interface shows Andrew's list of contacts, from which it can be seen that "Abbie" is at work, as portrayed by an office building icon, Charles is at home, portrayed by a house icon, and Brian is in a car, portrayed as a car icon. The house icon is also coloured red to indicate that Charles is not currently contactable, the car icon is coloured green to indicate that Brian is contactable, whilst the office building icon is coloured yellow to indicate that Abbie is busy, but contactable to some degree (i.e. a restricted availability). The presence client manager is configured to define the appropriate icon and status indication (e.g. colour) using status information relating to each contact provided by the contact's presence client manager and/or information specified by the particular contact themselves (e.g. Charles may have specifically set his status as uncontactable, due to not wanting to be contacted). The displayed indications also incorporate contextual information from Andrew himself. Charles' presence client manager would typically send the status information to the network's presence server, from where the presence client manager on Andrew's device would typically obtain the information.

If Andrew wishes to contact Brian, he would select the Brian icon and ideally be able to see further details regarding Brian in a submenu. As shown in Figure 2, Brian's availability in the sub-menu is listed as "free". It also indicates that he has a meeting at 2pm and is currently in a car, using hands free in Newbury, UK. In this regard Brian's presence client manager has extracted the relevant schedule information from Brian's calendar and also relevant location information from the network to determine that he is currently located in Newbury, UK. The "in car, hands free" information may be entered by Brian himself, or the presence client manager may determine this information by recognising that a hands free kit is connected to an input socket of Brian's mobile device or via a Bluetooth connection associated with the car.

By selecting the Brian icon, Andrew is also able to determine how best to contact him. This selection would ideally bring up a set of contact options, including a preferential indication for each means of contact. This preferential indication ideally takes contextual information relating to both Brian and Andrew into account. Thus the capability of Brian's device to access a video capability using a 3G bearer will be tempered by the capability of Andrew's device and for example the remaining battery level on the respective devices.

With reference to Figure 2, a sub menu has been created, which includes the contact options of "voice call", "video call" and "create message". The voice call option would be associated with an indication that Brian is capable of receiving a voice call, such as by colouring the voice call option in green or placing a green icon, such as an arrow-shaped bullet point, alongside the option. The video call option is red indicating that initiating a video call with Brian is not appropriate, either due to Brian's current "context" or Andrew's own "context". The "create message" option in turn has an indication that Brian is capable of receiving some form of message (i.e. restricted availability, which in this example is a yellow coloured indicator). The create message option, when selected, in turn brings up another sub menu, which lists five message options, being "text message", "multimedia message", "audio message", "email" and "instant message".

The audio message option is associated with a green indicator, indicating that Brian is capable of receiving an audio message. The green indicator may also be used to indicate that this is the best approach for communicating with Brian in the current circumstances. The text message, multimedia message and email options are all associated with a yellow indicator, indicating that these messages may also be received by Brian in his current situation, but are not optimal. Finally the Instant Message option is associated with a red indicator indicating that this option is not possible or not recommended.

The appropriate indicators for these call and message options may be determined by the presence client manager using a preference table. In this regard, for a given situation, such as "in car, hands-free", a preference for each of the options is defined, which the presence client manager extracts and presents to other users viewing Brian's contactability. An example of such a preference table for Brian is shown in relation to two different contexts, namely "in car and handsfree" and "in a meeting" below as Table 1:

| **Communication Mode** | **Contextual Information** | **Suitability Indicator** |
|---|---|---|
| Voice Call | In Car and handsfree | Available |
| Video Call | In Car and handsfree | Not Available |
| Text Message | In Car and handsfree | Restricted Availability |
| Multimedia Message | In Car and handsfree | Restricted Availability |
| Audio Message | In Car and handsfree | Available |
| Email | In Car and handsfree | Restricted Availability |
| Instant Message | In Car and handsfree | Not Available |
| Voice Call | In a meeting | Not Available |
| Video Call | In a meeting | Not Available |
| Text Message | In a meeting | Available |
| Multimedia Message | In a meeting | Available |
| Audio Message | In a meeting | Restricted Availability |
| Email | In a meeting | Restricted Availability |
| Instant Message | In a meeting | Not Available |

The suitability indicators may be preset or editable by Brian, so that he may incorporate his personal preferences. Allowing personal preferences will also allow Brian to control the means of communication that people use to contact him on (e.g. work mobile, home mobile, fixed phone, PC etc).

According to the invention, the presence client manager/server takes into consideration contextual information in relation to the caller's situation/status, in addition to the callee's situation/status. In this regard, before providing a suitability indication for each mode of contact, the presence client manager/server also determines the suitability/appropriateness of the mode of contact for the caller. In this way, the suitability indication presented to a user has relevance to both the user's own status/capabilities, as well as those of the party to be contacted.

Returning, then, to the Figure 2 example, for Brian, the Instant Messaging option is coloured red indicating that that mode of communication is not possible or not recommended. In this embodiment of the invention, this unavailability may be due to one or both of Brian and Andrew not having the Instant Messaging facility (or indeed having incompatible IM facilities). To implement this feature, a preference table (or two separate tables) with entries relating to both Brian and Andrew may be consulted to determine the suitability indication for this mode of communication. The table may have an "unavailable" indication against Brian and/or Andrew in respect of Instant Messaging, where they do not have an Instant Messaging facility installed on their terminals.

Again referring to the Figure 2 example, and considering multimedia messaging, another communication mode, which is highlighted as yellow in the example, indicating it is a possible means of communication, but not preferred. Andrew's client manager may be aware that both Andrew's and Brian's devices are 3G devices and therefore capable of multimedia messaging. For Brian, this may be an ideal mode of communication, so in the table, Brian's entry in regard to multimedia messaging may be "available". Andrew however, may be in a region with poor 3G network coverage. Andrew's presence client manager may therefore update his entry in the preference table to "restricted availability". With two different entries for the two parties in the table, the presence client manager/server determining the suitability indication would compare these two entries and select the lowest ranking indicator in a predetermined hierarchy, as indicated below in Table 2:

**Table 2**

| | Availability Options | | | | | | | | |
|---|---|---|---|---|---|---|---|---|---|
| Brian | Yes | Yes | Yes | Restricted | Restricted | Restricted | No | No | No |
| Andrew | Yes | Restricted | No | Yes | Restricted | No | Yes | Restricted | No |
| Comparison Result | **Yes** | **Restricted** | **No** | **Restricted** | **Restricted** | **No** | **No** | **No** | **No** |

In other words, in Table 2 the predetermined hierarchy from lowest to highest is "No", "Restricted" and then "Yes".

It is to be appreciated that whilst these examples have been in relation to a proposed communication between two parties, more than two parties is within the scope of the present invention. This may be the case for a discussion group of three or more parties that wish to communicate together. This is readily implemented in these embodiments of the invention, by referring to a further table entry applicable to each of the additional parties.

These determinations and calculations may be performed by the presence client server and/or a user's presence client manager. For example, Andrew's presence client manager may receive the preferential indications for each of his contacts from the presence client server, and his presence client manager may then compare these indications with Andrew's own contextual information and make changes as appropriate. Alternatively, all of the calculations may be performed on the presence client server, and the user's presence client manager simply informed of the result.

Andrew, viewing Brian's situation and recommended contact options based upon both Brian's and his own contextual information can then make an informed decision of how best to contact Brian, or whether the current point in time is appropriate. For instance, Andrew may be looking to obtain Brian's immediate opinion on the form of a document, but would see from his presence profile that Brian is not currently in a position to review the document, so that Andrew would be better off seeking someone else's advice.

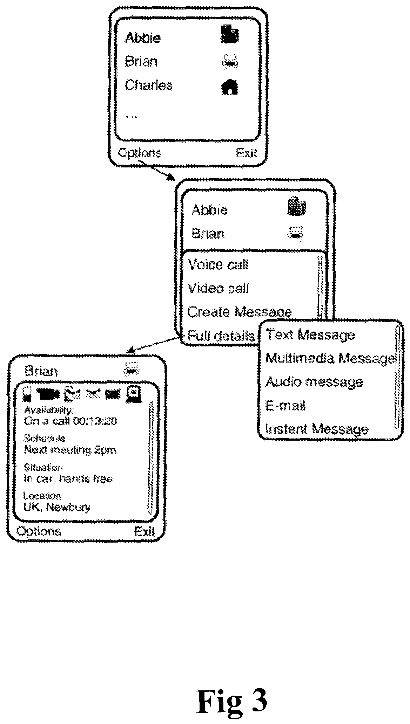

Figure 3 presents a further example to illustrate this embodiment of the invention. As with the Figure 2 example, in Andrew's display, Abbie is associated with a yellow building, indicating that she is at work and busy, although contactable in some way. Charles is again associated with a red house, and so is at home and uncontactable. In this example Brian is illustrated by a yellow car indicating that he is in the car, and busy but contactable in some way.

By selecting "option", Andrew can see that Brian's availability indicates that he is currently on a call, but otherwise his position and situation are the same as per the Figure 2 example. In this regard, the presence client manager is configured to recognise when Andrew is utilising his handset to make or receive a call, and update his availability status accordingly. It is also to be noted that in the submenu, Brian's availability of "on a call 00:13:20" is coloured yellow. This indicates that he has been involved in the voice call for a total of thirteen minutes and twenty seconds, and whilst busy, is contactable by other means.

In view of his "on a call" busy status, the most appropriate contact options for Brian are now different to those from the Figure 2 example. Where in Figure 2 the voice call option was coloured green, indicating it was a preferable means of contacting Brian, it is now coloured yellow indicating that it is a possible means of communication with Brian, but not a recommended one (e.g. Brian may be able to receive Andrew's phone call, despite being on a call if he has call waiting).

Where Brian does not have call waiting, or where Brian is receiving a call from a very important person, then the "voice call" option may be coloured red. To implement this feature, Brian may specify certain persons in his address book in relation to who his phone calls are not be interrupted.

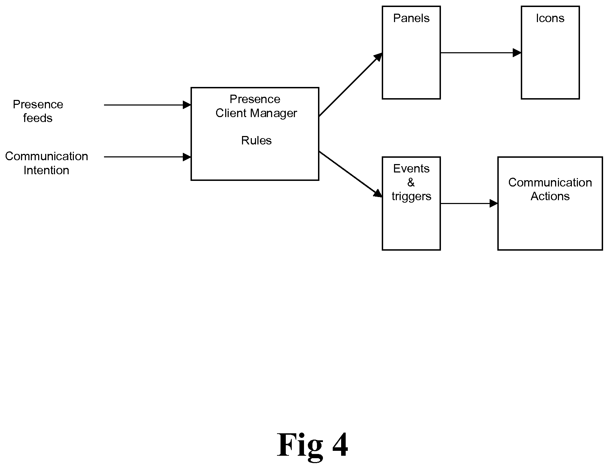

Figure 4 shows an architectural view of the operation of the invention. By processing information from presence feeds with user intention information in accordance with rules, the presence client manager generates a context for any given proposed communication. That context includes both contextualised panels for presenting one or more options to the user (referred to elsewhere in the present document as "submenus") and a set of associated events, triggers and their corresponding communications actions. Clearly, there can be more than one client presence manager (also referred to as a "rules engine" because of its use of rules) operating within the end-to-end communication.

Consider the "context" of Figure 3 of the patent using the architectural concepts in Figure 4. The top "panel" illustrates the presence for Abbie, Brian and Charles. The "intention" is for Andrew (user of the displaying device) to make effective and timely communication with Brian; the "intention" for Brian is to advertise himself to Andrew as on a call in his car but able to take a call legally, and potentially available until his meeting at 2pm. The "rules" are operated within Andrew's client presence manager (i.e. "what parts of presence do I wish to see?") and within Brian's presence manager (i.e. "what parts of my presence do I wish to share with Andrew - privacy etc"?) and hence define the contextualised panel displaying Brian's presence (bottom left in Figure 2). The panels at centre and lower right display contextualised options for Andrew to contact Brian directly or by message, colour coded and preferentially ordered top-to-bottom.

An example of an "event" could be the end of Brian's current call, which triggers the action of Andrew's phone automatically placing a call to Brian but only if it is before 2pm.

All the other options are the same as per the Figure 2 example, with audio message being the only option now coloured green, meaning that it is the best means to currently make contact with Brian. The email, text and multimedia message options are still coloured yellow indicating that they are less preferable as they are less appropriate to Brian's status/situation.

Therefore these examples show that the embodiments of the present invention are not only capable of providing a third user's contacts with more meaningful information regarding the user's location, availability and/or situation but that the contextual status information can be used to maximise a contact's chances of a successful communication with the device user.

Therefore, in this way, not only does a user's device provide the user's presence/status information to contacts/associated users, but it is configured to utilise presence/status information received from such associated users/contacts in directing the device user to make an informed decision regarding contacting those associated users.

It is to be appreciated that although these examples use coloured icons and coloured written descriptions to represent each contact's situation and availability, this is not an essential component of the invention, and that other means of status indication may be used, including varying degrees of grey-scaling, vocalised descriptions or a hierarchical listing of contact options.

A particularly useful implementation of this embodiment of the invention is in relation to users with more than one device, such as a personal mobile phone and a Blackberry™ for their work. The contextual communication network can handle such a situation by communicating "device specific" status information to the user's friends and associates. For example, if A wishes to make a voice call to B, and B has a personal mobile phone and a Blackberry™, then the presence client manager/server can determine whether one is preferable over the other for voice calls. For example, B may have a list of preferences which specifies that no voice calls are made to the Blackberry™.

Alternatively, the presence client manager/server may determine the same from network conditions, such as if B is using HSDPA on his phone for data transfer it may not be feasible for it to take a voice call at the same time. As B is not engaged in a conversation, his unavailability for voice calls would not be communicated to A by using the red "unavailable" icon. Instead B's status would be shown as available to accept a voice call using the green "available" icon and the call would be diverted to B's Blackberry™.

The embodiments described so far have predominantly been in relation to exchanging status information between mobile devices. However, contextual status information can also be obtained from devices in communication with the mobile telecommunications network, such as networked PCs. These PCs may also be associated with their own presence client manager, able to utilise data from the PC's databases as well as data about usage of the PC. For instance, examples of usage that may be used to indicate presence include whether users are logged on or off and when a user last touched the keyboard.

### Learning Ability

The learning ability of the presence client manager/server is a preferred feature of these embodiments of the invention. In this regard, the presence client manager/server is configured to recognise patterns and/or the regular recurrence of particular events/situations in order to build and collect contextual status information.

For instance, the presence server may notice that all but one member (i.e. member A) of a particular work group are involved in a conference call. Based on this information, the presence server may send a message to the leader of the work group "Invite Member A to conference call?" If the response is "yes", the presence server would then set in train the required mechanism to invite and include Member A in the conference call.

In another example, the presence client manager may recognise a future telephone conference for a particular work group scheduled at a particular time in the team leader's calendar. Based on this information, the presence client manager may send a message to the team leader, such as "Automated set up of conference call <at the particular time>?" If the response is "yes", the presence client manager would then set in train the required mechanism to invite all the scheduled attendees to the conference call at the scheduled time.

In a further example, the presence client manager may determine that a dropped call has occurred, rather than an intentional end of the call. The presence server, where it is integrated into the cellular network, can detect this condition and set in train the procedure necessary for reconnecting the parties involved in the call. The reason for the call being dropped will be due to a device having lost touch with the network. Therefore, corrective action is best performed from the network side. The presence client manager/server and the mobile network will ascertain when the call can be successfully re-established, and then ring all parties involved automatically, before joining the calls together.

In a still further example, the presence client manager/server may recognise the pattern of two users continually leaving voice mail messages for each other, and being unable to actually establish a voice call. In this situation, the presence client manager/server may be configured to send a message to one of the parties, such as "Set up voice call with Party A?" If the response is "yes", the presence client manager/server would then set in train the required mechanism to set the call up. Calendars and diary entries for each party may be used to confirm availability at a particular time.

In another example, after X has called Y, and the call goes unanswered, Y is made aware of the missed call. So that Y knows when is best to contact X, the presence client manager of Y inserts in the missed call message an indication of X's availability to receive the call.

In a further example, if X wants to make a video-call to Y, but does not know if Y has 3G coverage and/or the right type of phone, X can use the presence client manager/server to determine to which network Y is currently connected to and also the device Y is using. From this information X can determine whether he can make a video call to Y, and if not, what alternative means of communication are available to him.

Another example is in the situation where a user sends an email to three people and the presence client manager recognises that the user has sent an email to the same three people on at least one other previous occasion. The presence client manager is therefore configured to ask "would you like to create a distribution list for these people?" and take steps to create the list if a "yes" reply is received.

In a similar manner, if a user is using the internet via their handset, and upon arriving at a particular location, if the presence client manager recognises that the user has visited the site on at least one other previous occasion, the presence client manager is configured to ask "would you like this location to be stored as a favourite?"

These embodiments of the invention have predominantly been described in relation to enabling people to utilise and share contextual status information using a mobile telecommunications network. According to an alternative embodiment of the invention, however, other entities including animals, plants and inanimate entities, such as vehicles, goods and buildings, may also be associated with a presence client manager and provide information regarding their status. Typically inanimate entities may have a communications presence, based on availability, situation and capability, as well as a functional presence. Therefore, inanimate entities in which a user is interested may be added to the user's contact list. In this way, the user can easily interrogate the entities to ascertain their status.

An inanimate entity may take various forms, including a location such as business premises or a tourist attraction (e.g. a museum or funfair), a vehicle and a package and may be static, mobile or moveable. It could even take the form of a PC, whose presence advertises that it requires backing-up (according to some predetermined policy) and is in range of a network with sufficient bandwidth to make remote back-up feasible.

Considering the package example, a package being delivered may be associated with its own a presence client manager. Relevant people, such as the customer to whom the package is to be delivered, may then use the information transmitted by the package's presence client manager in order to know:
- where the package is;
- what the package contains;
- how far away the package is; and/or
- when the package is likely to be delivered.

In this regard, the presence client manager associated with the package will have a wirelessly locatable "network identity", and relevant people may be provided with the network identity of the package's presence client manager, so that they can keep the package as a "contact" on their mobile device, and be pushed information about the status of the package. For instance, the package's presence client manager may regularly signal location information to the network's presence server, which is in turn provided to the customer's mobile device. The "network identity" may be an equivalent identity to that given to mobile handsets, such as an IMSI, a temporary IMSI (TMSI), a network assigned token, MSISDN, an IP address, a MAC number and/or an IMEI.

The location information may be determined based upon cell ID, GPS or the like. Alternatively, it may be determined based upon association with another entity, in order to reduce usage of network resources. For instance, if the package is located on a lorry, rather than locations for both the lorry and package being determined, one could be determined and shared with the other.

Other inanimate entities to which a presence may be applied are cars which could regularly report location status and/or running status to its owner and/or manufacturer. Air conditioners in buildings may report their status to an engineer, so the engineer knows when he is needed for maintenance. Documents may also be an object to which a presence is applied, such that an associated presence client manager intermittently reports an amendment history.

Places may also be given a presence client manager. For instance, a restaurant may communicate its availability based upon its opening hours. If it is booked out, it may also communicate this to regular customers, so they know if there is table availability, before trying to call to book a table.

In another example, homes may be given a presence client manager, and link their presence to a burglar alarm, for instance, so that an owner, away from the house may continually have access to a security status of the house whilst they are away.

In a further example, a car parking space may have a presence client manager and be able to report when it is empty.

With more and more entities, such as people and inanimate objects, obtaining mobile presence identities, the need also arises of being able to manage those identities so that information may be presented to users in a meaningful way, and with repetition avoided or at least minimised. For instance, expanding on the package example described above, if the package was located on a truck, which also had its own mobile identity, and was driven by a driver, with his own mobile device, and all were heading to a depot, again with its own identity, then the courier company would be able to see the position/status of all four entities.

If the statuses of all four entities are displayed separately, however, the interrelationship between the four is not immediately apparent. Therefore, according to this embodiment of the invention, a number of related entities are grouped into a collection, and a collection presence/profile is established. Preferably the collection presence is assigned to a "spokesman" or representative of the collection by linking the collection presence to the representative. Designating a representative is advantageous, as it helps to simplify communication choices and reduce network traffic, since the collection preferably only communicates via the representative. Each entity is still ideally capable of communicating as an individual, but when communications with the core network relate to the collection, they are only performed through the representative.

Collections are preferably entered into an interested user's contact list, with the members arranged in a sub-menu off the collection name, so that each can be separately interrogated. It is also to be appreciated that an entity may belong to more than one collection.

As an example, a lorry L, a package P, a depot D and a driver, Fred, are formed into a collection. Fred is made the representative of the group, and accordingly is assigned the collection presence as well as his own presence. It is preferable that Fred maintains his own presence, so that friends and family, to whom the collection presence is likely to be irrelevant, may still obtain useful status information regarding Fred. A "presence" is effectively a profile including status information relating to each entity, and typically is made up of one or more fields, such as availability, location and/or capability fields.

The following Table 3 details example status information that may be communicated for each entity and their collective entity. Separate fields have been listed for each entity's "availability", "situation" and "capability", however, this is just one possible approach for displaying the presence profile, and other ways are possible, such as combining the information into one "status" field.

**TABLE 3**

| **Entity** | **Fred** | **Lorry** | **Package** | **Depot D** | **Collection** |
|---|---|---|---|---|---|
| **Availability** | In a voice call | In use | In transit | Open for business | Reachable via Spokesman Fred Collection has Fred, Lorry L, Package P, Depot D |
| **Situation/ Location** | In Lorry, Moving Package, At depot D | Driver is Fred Contains package P, At depot D | On Lorry L, At depot D | Lorry L located in Bay 3 | At depot D |
| **Capabilities** | Has lorry car-kit and phone capability | Has tail lift | Can report at 10 minute intervals | Can take 40 tonne lorries | Communication via lorry car-kit and phone capability of Fred |

From this example it can be seen that the collection's availability field provides information useful for communicating with the collection.

It can also be seen that a collection may comprise any combination of devices usable by people, such as Fred, inanimate static entities/places (e.g. the depot) and inanimate mobile/portable entities (such as the Lorry L and Package P). The "collection" defines the interrelationship between the different entities, and allows the connections between them to be readily determined. Links, such as hyperlinks may be provided between the status entries for each of the entities and their collection presence. A collection may also include other collections.

Whilst ideally a collection only has one "spokesman" representing the collection, it is also possible that more than one spokesman need be designated. For instance, a secondary spokesman may be designated, who represents the group in the event that the main spokesman is uncontactable.

Figure 4 illustrates a use of the contextual status information by the presence client manager/server according to an embodiment of the invention, whereby a user's daily schedule includes location and context fields. In the Figure 4 example, the schedule includes listings of relevant events/people/communications, which are displayed in a table in relation to "people", together with their location and situation/event contexts. The table in Figure 4 has six columns relating to "entry type", relevant "people", "subject", "place", "context" and "date/time". The information in the Figure 4 example is currently sorted by time, although the data may be sorted by any of the six columns.

The first entry in the table is in regard to an email message received from Andrew. It is apparent that the item is an email message from the "entry type" icon used in the first column. The email was sent in the context of a "Daily Brief', and it has the subject of "today's targets". From the summary, it can also be seen that the message was received at 8.30 and that Andrew is currently at the premises of Client A.

The next item in the table is a voice message from Ben, which has the subject of "Let's meet when I arrive at work". To obtain the subject for this item, since it is a voice message, Ben could enter the description in written form via his device or transcoding of his voice may be used. Ben's location is also displayed as 10km from work.

The third item in the table is a text/SMS message from Debbie regarding a contract to be signed. The summary shows Debbie to be at work, and the SMS message has the subject of "successful meeting".

The final item in the table is a planning meeting that is scheduled with Ben and Debbie at 11.10, which is going to take place as a "net-meeting".

From this example, it can be seen that the presence client manager may also be used to merge and summarise messages/communications of various types, and associate these with location information regarding the people concerned and also with scheduled appointments and events. The use of a table to display these linked information fields improves its usability.

Further, by storing communications data on the basis of person, place and context, particularly in the table format of Figure 4, it becomes possible to communicate with appropriate people through location and/or context searching. For instance, by viewing the table of Figure 2, if it was desired to speak with either Debbie or Ben before their net-meeting, from the table it could be seen that Ben was still on his way to work, whereas Debbie was in the office, making Debbie the best person of the two to contact.

A further advantage of this embodiment of the invention can be appreciated when the example of work-related information being shared in a working group is considered. At a glance, a sales manager would be able to determine where each member of his working group is and what they have done/are doing. Further, should the sales manager have a question to ask one of the group, for instance about stock inventory, the manager could use the group information to determine who in the group is in or near the relevant stock area and is currently contactable by voice to ask the question.

In summary, from these embodiments of the invention, it can be seen that the various presence client managers and presence server share data, and that the data can be obtained from various sources, such as from mobile devices, networks including data networks, mobile and fixed communications networks, as well as other devices in communicable relation with the networks. In other words, the embodiments of the invention are applicable to any device/terminal capable of interacting with a mobile network.

In this regard, mobile devices are able to provide data from their databases, such as calendar and contact databases, which may be unique to the device or synchronised with an office system. They can also provide data about user availability, such as being able to indicate when a user is on a call or in a meeting. This allows the presence client manager/server to build up profiles, for instance on who is called most often and with whom phone conferences have been undertaken lately.

The users of presence client managers may also seek to implement privacy settings, particularly in regard to their personal locations. This may be implemented an individual contact basis. For instance, for a particular contact, the user may specify that they are either listed as "at home", when that location applies, and for any location as "not at home". In other words, the location is specified as one location and a logical operation on this position.

User availability, as used in this specification is intended to be interpreted broadly, and to cover various forms of availability including user reachability, contactability, readiness to communication and scheduled availability. Similarly user capability is intended to be interpreted broadly and to cover situations such as a user's communication environment, a user's preferred communication media, user's device facilities and accessories, network access and network availability. Further, user situation/location is intended to be interpreted broadly and to cover situations such as location in an absolute or relative sense, country location, time zone location and current user activity situation. The expression "user" is also intended to be interpreted broadly and is intended to cover any entity with which a suitable device might be associated and/or which may be represented within the presence service delivered by the invention: the ambit of the term includes both animate and inanimate entities and explicitly includes people, other living creatures, and places as well as static, mobile and moveable objects.

The embodiments of the invention have also been described in relation to users communicating with known contacts/entities over a mobile telecommunications network. The present invention may also be implemented between entities for which no previous relationship has been established.

For instance, a user may decide they require a taxi, and send a message to that end to the presence server. Based upon the subject of message, and the user's location, the presence server may send the user presence data for one or more taxi companies, which may allow the user to see which taxi company is closest, and also, perhaps, the availability of taxis from each. Alternatively, or in addition, the presence server may notify one or more taxi companies of the location of the user, so that they may go and meet the user requiring the taxi. The notified taxi company would be selected based on the user's location, such that preferably the closest taxi company/taxi is notified.

The user may also broadcast a taxi request, preferably to a taxi "collection" in order to allow taxi drivers and/or taxi companies who are a member of the "collection" to see the user and be made aware of the user's location and need for a taxi.

The embodiments of the invention have particularly been described in relation to a GSM/UMTS communication network, however the principles may readily be applied to other network configurations, including the proposed 3GPP LTE (Long Term Evolution) network, which is not yet implemented.

The embodiments of the invention have also particularly been described in relation to their usage in conjunction with databases (such as a user's calendar) located on the mobile terminal, however such databases may also be located in the network or in a remote server accessible via the network. In this regard, most functionalities of the presence client manager may alternatively be performed by the presence server. This aspect is particularly applicable to older devices which do not have the ability to run client programs, and hence are not capable of having their own presence client manager.

For such devices, the network would effectively run the presence client manager for them, and communicate the presence information usually communicated through the GUI/icons via other means, such as SMS. Alternatively, an Interactive Voice Response (IVR) mechanism may be used, which, for example, could provide an acquaintance B's status and invite them to "press 1 to call B or press 2 to leave B a voicemail".

The invention is set out in the appended independent claims. Other features of the invention are defined in the following numbered statements:
1. In a mobile telecommunications network including a plurality of user devices each configured to communicate across the network, a method of communicating contextual information for a collection of user devices, the method including:
   associating a number of the plurality of user devices as a collection; selecting one of the number of devices as a representative of the collection; defining one or more contextual information fields relating to the collection and associating the one or more fields with the representative device; and using the representative device to communicate the contextual information fields to other devices.
2. A presence client manager configured for use on a communications device, the presence client manager including a schedule monitor configured to: monitor a schedule associated with the communications device; upon detecting a scheduled teleconference, determining one or more participants of the scheduled teleconference; determine a contact telephone number relating to each of the participants; and provide the contact telephone numbers to a call establishment means in order to establish the teleconference between the communications device and the one or more participants.
3. A presence client manager configured for use on a communications device, the presence client manager including a communications monitor configured to: monitor circuit-switched communications that the communications device is engaged in; and upon detecting a communication termination that is not initiated by the user of the communications device and/or the other participant or participants in the communication, notify a call establishment means in order to re-establish the communication.
4. A presence client manager configured for use with a device communicable with a mobile telecommunications network, the presence client manager including: a processing engine configured to: obtain status information relating to a user of the device; and use the status information to provide personalised user information relating to the user's location, availability and/or capabilities.
5. A presence server configured for use in a mobile telecommunications network with a plurality of user devices in communication relation with the mobile telecommunications network, the server including a processor configured to: obtain status information relating to a user of each device; and use the status information to provide personalised user information relating to each user's location, availability and/or capabilities.
6. The presence client manager for use with a device communicable with a mobile telecommunications network, the presence client manager including: a database of users associated with a user of the device; a status interface configured to receive status information relating to at least one of the associated users; and a processing engine including a display engine for generating a table on a display means of said device, wherein the table merges communications received by the device and user appointments/events from a schedule of the device; and wherein the table is populated with a respective user context for each associated user involved in the communications and user appointments/events.

## Claims

1. In a mobile telecommunications network including a plurality of user devices each configured to communicate across the network via at least one mode of communication, a method of a first user device obtaining a suitability indicator regarding a suitability of at least one mode of communication with another user device, the method comprising:
determining first contextual information in relation to the first user device, wherein the first contextual information is determined from at least one of the following types of information:
network availability for the first user device;
a capability of the first user device based on a device type of the first user device;
determining second contextual information in relation to the other user device, wherein the second contextual information is determined from at least one of the following types of information;
network availability for the other user device;
a capability of the other user device based on a device type of the other user device; and
for each of the at least one mode of communication, determining the suitability indicator using the first and second contextual information, such that by using the contextual information for both the first user device and the other user device, a suitable mode of communication between them can be determined.

2. The method of claim 1 further including:
determining a first suitability indicator from the first contextual information relating to the first user device;
determining a second suitability indicator from the second contextual information relating to the other user device; and
selecting the indicator for each communication mode from the first and second suitability indictors.

3. The method of claim 2 wherein the first and second suitability indicators are determined using a preference table linking suitability indictors with different types of contextual information in relation to a plurality of communication modes.

4. The method of claim 2 or 3 wherein the indicator is selected by:
ranking each of the first and second suitability indicators in a predetermined hierarchy according to predetermined criteria; and
choosing whichever of the suitability indicators has the lowest ranking.

5. The method of any one preceding claim wherein the step of determining the first contextual information is performed upon identifying a communication set-up request by a user of the first user device to the other user device; the method further comprising:
transmitting the first contextual information to the other user device during a call set-up procedure, such that the contextual information is usable by the user of the other user device in determining a purpose of the communication request.

6. The method according to any one preceding claim further including:
associating a number of the plurality of user devices as a collection;
selecting one of the number of user devices as a representative of the collection;
defining one or more contextual information fields relating to the collection and associating the one or more fields with the representative user device; and
using the representative user device to communicate the contextual information fields to other devices.

7. The method according to any one preceding claim further including:
monitoring a schedule associated with the first user device;
upon deleting a scheduled teleconference, determining one or more participants of the scheduled teleconference;
determining a contact telephone number relating to each of the participants; and
providing the contact telephone numbers to a call establishment means in order to establish the teleconference between the first user device and the one or more participants.

8. The method according to any one preceding claim further including:
monitoring circuit-switched communications that the first user device is engaged in; and
upon detecting a communication termination that is not initiated by a user of the first user device and/or the other participant and participants in the communication, notifying a call establishment means in order to re-establish the communication.

9. A presence client manager configured for use with a first device communicable with mobile telecommunications network, the presence client manager including:
a database of users associated with a user of the first device;
a processing engine configured to determine first contextual information relating to the first device, wherein the first contextual information is determined from at least one of the following types of information:
network availability for the first device;
a capability of the first device based on a device type of the first device;
an interface configured to receive second contextual information relating to another device of an associated user, wherein the second contextual information is determined from at least one of the following types of information:
network availability for the other device;
a capability of the other device based on a device type of the other device; and
the processing engine is further configured to determine a suitability indicator regarding a suitability of at least one mode of communication between the first device and the other device, using the first and second contextual information, such that by using the contextual information for both the first device and the other device, a suitable mode of communication between them can be determined.

10. The presence client manager of claim 9 wherein the processing engine is further configured to:
determine a first suitability indicator from the first contextual information;
determine a second suitability indicator from the second contextual information; and
select the indicator for each communication mode from the first and second suitability indicators.

11. The presence client manager of any one of claims 9 or 10, wherein the database of users includes at least one entity selected from a group including people, animals, plants, static inanimate objects, moveable inanimate objects, mobile inanimate objects and collections of such entities.

12. The presence client manager of any one of claims 9 to 11 wherein the processing engine is configured to:
obtain status information relating to a user of the device; and
use the status information to provide personalised contextual information relating to the user's location, availability and/or capabilities.

13. The presence client manager of claim 12 further including obtaining the status information using at least one of the following sources:
a) resources on the device;
b) network resources; and/or
c) a user input means.

14. The presence client manager of claim 13 wherein the resources on the device include at least one of:
a) a calendar;
b) a user schedule; and/or
c) a database associating predetermined user positions with one or more personalised descriptions.

15. The presence client manager of any one of claims 12 to 14 wherein the status information determined by the processing engine includes positional data, and the personalised user information that the processing engine is configured to provide includes one or more of the following:
a) a personal location description of the positional data;
b) a spatial or regional location description of the positional data:
c) a relative spatial location description of the positional data;
d) a user schedule-based location described related to the positional data;
e) a time zone description related to the positional data;
f) an environmental location description of the positional data
g) the user's actual location;
h) the user's location relative to an associated user; and/or
i) a logical expression relating to the user's actual location.

## Patentansprüche

1. In einem mobilen Telekommunikationsnetz umfassend eine Vielzahl von Benutzervorrichtungen, jede so konfiguriert, dass sie über das Netz hinweg über zumindest einen Modus der Kommunikation kommuniziert, ein Verfahren einer ersten Benutzervorrichtung, die einen Eignungsindikator bezüglich einer Eignung von zumindest einem Modus der Kommunikation mit einer anderen Benutzervorrichtung ermittelt, wobei das Verfahren Folgendes umfasst:
Bestimmen erster Kontextinformationen im Zusammenhang mit der ersten Benutzervorrichtung, wobei die ersten Kontextinformationen aus zumindest einem der folgenden Informationstypen bestimmt werden:
Netzverfügbarkeit für die erste Benutzervorrichtung;
eine Fähigkeit der ersten Benutzervorrichtung basierend auf einem Vorrichtungstyp der ersten Benutzervorrichtung;
Bestimmen zweiter Kontextinformationen im Zusammenhang mit der anderen Benutzervorrichtung, wobei die zweiten Kontextinformationen aus zumindest einem der folgenden Informationstypen bestimmt werden:
Netzverfügbarkeit für die andere Benutzervorrichtung;
eine Fähigkeit der anderen Benutzervorrichtung basierend auf einem Vorrichtungstyp der anderen Benutzervorrichtung; und
für jeden des zumindest einen Modus der Kommunikation, Bestimmen des Eignungsindikators unter Verwendung der ersten und zweiten Kontextinformationen, derart, dass durch die Verwendung der Kontextinformationen für sowohl die erste Benutzervorrichtung als auch die andere Benutzervorrichtung ein geeigneter Modus der Kommunikation zwischen ihnen bestimmt werden kann.

2. Das Verfahren nach Anspruch 1, weiter umfassend:
Bestimmen eines ersten Eignungsindikators aus den ersten Kontextinformationen im Zusammenhang mit der ersten Benutzervorrichtung;
Bestimmen eines zweiten Eignungsindikators aus den zweiten Kontextinformationen im Zusammenhang mit der anderen Benutzervorrichtung; und
Auswählen des Indikators für jeden Modus der Kommunikation aus den ersten und zweiten Eignungsindikatoren.

3. Das Verfahren nach Anspruch 2, wobei die ersten und zweiten Eignungsindikatoren unter Verwendung einer Einstellungstabelle bestimmt werden, in der Eignungsindikatoren mit unterschiedlichen Typen von Kontextinformationen im Zusammenhang mit einer Vielzahl von Modi der Kommunikation verbunden werden.

4. Das Verfahren nach Anspruch 2 oder 3, wobei der Indikator mittels Folgendem ausgewählt wird:
Bilden einer Rangfolge der ersten und zweiten Eignungsindikatoren in einer zuvor bestimmten Hierarchie entsprechend zuvor bestimmten Kriterien; und
Auswählen des Eignungsindikators mit dem niedrigsten Rang.

5. Das Verfahren nach einem vorhergehenden Anspruch, wobei der Schritt des Bestimmens der ersten Kontextinformationen infolge der Identifizierung einer Kommunikationseinrichtungsanfrage durch einen Benutzer der ersten Benutzervorrichtung an die andere Benutzervorrichtung durchgeführt wird; wobei das Verfahren weiter Folgendes umfasst:
Übermitteln der ersten Kontextinformationen an die andere Benutzervorrichtung während eines Verbindungseinrichtungsverfahrens, derart, dass die Kontextinformationen durch den Benutzer der anderen Benutzervorrichtung bei dem Bestimmen eines Zwecks der Kommunikationsanfrage verwendbar sind.

6. Das Verfahren nach einem vorhergehenden Anspruch, weiter umfassend:
Zuordnen einer Anzahl der Vielzahl von Benutzervorrichtungen als eine Sammlung;
Auswählen einer aus der Anzahl an Benutzervorrichtungen als repräsentativ für die Sammlung;
Definieren eines oder mehrerer Kontextinformationsfelder im Zusammenhang mit der Sammlung und Zuordnen des einen oder der mehreren Felder an die repräsentative Benutzervorrichtung; und
Verwenden der repräsentativen Benutzervorrichtung zur Kommunikation der Kontextinformationsfelder an andere Vorrichtungen.

7. Das Verfahren nach einem vorhergehenden Anspruch, weiter umfassend:
Überwachen eines Zeitplans, welcher der ersten Benutzervorrichtung zugeordnet ist;
infolge der Löschung einer geplanten Telefonkonferenz, Bestimmen eines oder mehrerer Teilnehmer der geplanten Telefonkonferenz;
Bestimmen einer Kontakttelefonnummer im Zusammenhang mit jedem der Teilnehmer; und
Bereitstellen der Kontakttelefonnummern an eine Verbindungseinrichtungsvorrichtung, um die Telefonkonferenz zwischen der ersten Benutzervorrichtung und dem einen oder den mehreren Teilnehmern einzurichten.

8. Das Verfahren nach einem vorhergehenden Anspruch, weiter umfassend:
Überwachen der leitungsvermittelten Kommunikation, an der die erste Benutzervorrichtung beteiligt ist; und
infolge der Erkennung einer Beendigung der Kommunikation, die nicht durch einen Benutzer der ersten Benutzervorrichtung und/oder dem anderen Teilnehmer und den Teilnehmern an der Kommunikation eingeleitet wurde, Benachrichtigen einer Verbindungseinrichtungsvorrichtung zur Wiederherstellung der Kommunikation.

9. Eine Anwesenheits-Clientverwaltungseinheit, konfiguriert zur Verwendung mit einer ersten Vorrichtung, die verbindbar mit einem mobilen Telekommunikationsnetz ist, wobei die Anwesenheits-Clientverwaltungseinheit Folgendes umfasst:
eine Datenbank von Benutzern, die einem Benutzer der ersten Vorrichtung zugeordnet sind;
eine Verarbeitungseinheit, so konfiguriert, dass sie erste Kontextinformationen im Zusammenhang mit der ersten Benutzervorrichtung bestimmt, wobei die ersten Kontextinformationen aus zumindest einem der folgenden Informationstypen bestimmt werden:
Netzverfügbarkeit für die erste Vorrichtung;
eine Fähigkeit der ersten Vorrichtung basierend auf einem Vorrichtungstyp der ersten Vorrichtung;
eine Schnittstelle, die so konfiguriert ist, dass sie zweite Kontextinformationen im Zusammenhang mit einer anderen Vorrichtung eines zugeordneten Benutzers empfängt, wobei die zweiten Kontextinformationen aus zumindest einem der folgenden Informationstypen bestimmt werden:
Netzverfügbarkeit für die andere Vorrichtung;
eine Fähigkeit der anderen Vorrichtung basierend auf einem Vorrichtungstyp der anderen Vorrichtung; und
wobei die Verarbeitungseinheit weiter so konfiguriert ist, dass sie einen Eignungsindikator bezüglich einer Eignung zumindest eines Modus der Kommunikation zwischen der ersten Vorrichtung und der anderen Vorrichtung bestimmt, unter Verwendung der ersten und zweiten Kontextinformationen, derart, dass durch die Verwendung der Kontextinformationen für sowohl die erste Vorrichtung als auch die andere Vorrichtung ein geeigneter Modus der Kommunikation zwischen ihnen bestimmt werden kann.

10. Die Anwesenheits-Clientverwaltungseinheit nach Anspruch 9, wobei die Verarbeitungseinheit weiter so konfiguriert ist, dass:
sie einen ersten Eignungsindikator aus den ersten Kontextinformationen bestimmt;
sie einen zweiten Eignungsindikator aus den zweiten Kontextinformationen bestimmt; und
den Indikator für jeden Modus der Kommunikation aus den ersten und zweiten Eignungsindikatoren auswählt.

11. Die Anwesenheits-Clientverwaltungseinheit nach einem der Ansprüche 9 oder 10, wobei die Datenbank von Benutzern zumindest ein Element umfasst, das aus einer Gruppe umfassend Personen, Tiere, Pflanzen, statische leblose Objekte, bewegliche leblose Objekte, sich bewegende leblose Objekte und Sammlungen dieser Elemente ausgewählt wird.

12. Die Anwesenheits-Clientverwaltungseinheit nach einem der Ansprüche 9 bis 11, wobei die Verarbeitungseinheit so konfiguriert ist, dass:
sie Statusinformationen im Zusammenhang mit einem Benutzer der Vorrichtung ermittelt; und
die Statusinformationen verwendet, um personalisierte Kontextinformationen im Zusammenhang mit dem Standort, der Verfügbarkeit und/oder den Fähigkeiten des Benutzers bereitzustellen.

13. Die Anwesenheits-Clientverwaltungseinheit nach Anspruch 12, weiter umfassend das Ermitteln von Statusinformationen unter Verwendung von zumindest einer der folgenden Quellen:
a) Ressourcen auf der Vorrichtung;
b) Netzressourcen; und/oder
c) eine Benutzereingabeeinrichtung.

14. Die Anwesenheits-Clientverwaltungseinheit nach Anspruch 13, wobei die Ressourcen auf der Vorrichtung zumindest eine der folgenden umfassen:
a) einen Kalender;
b) einen Zeitplan des Benutzers; und/oder
c) eine Datenbank, die zuvor bestimmte Benutzerpositionen einer oder mehreren personalisierten Beschreibungen zuordnet.

15. Die Anwesenheits-Clientverwaltungseinheit nach einem der Ansprüche 12 bis 14, wobei die durch die Verarbeitungseinheit ermittelten Statusinformationen Positionsdaten umfassen und die personalisierten Benutzerinformationen, welche die Verarbeitungseinheit entsprechend ihrer Konfiguration bereitstellt, eine oder mehrere der folgenden umfassen:
a) eine personenbezogene Standortbeschreibung der Positionsdaten;
b) eine räumliche oder regionale Standortbeschreibung der Positionsdaten;
c) eine relative räumliche Standortbeschreibung der Positionsdaten;
d) ein auf dem Zeitplan des Benutzers basierender Standort, der im Zusammenhang mit den Positionsdaten beschrieben wird;
e) eine Zeitzonenbeschreibung im Zusammenhang mit den Positionsdaten;
f) eine Umgebungsstandortbeschreibung der Positionsdaten;
g) der tatsächliche Standort des Benutzers;
h) der Standort des Benutzers relativ zu einem zugeordneten Benutzer; und/oder
i) ein logischer Ausdruck im Zusammenhang mit dem tatsächlichen Standort des Benutzers.

## Revendications

1. Dans un réseau de télécommunications mobile comprenant une pluralité de dispositifs d'utilisateur, chacun d'eux étant configuré de façon à communiquer sur le réseau par l'intermédiaire d'au moins un mode de communication, l'obtention par un procédé d'un premier dispositif d'utilisateur d'un indicateur d'adéquation concernant une adéquation d'au moins un mode de communication avec un autre dispositif d'utilisateur, le procédé comprenant :
la détermination de premières informations contextuelles en relation avec le premier dispositif d'utilisateur, où les premières informations contextuelles sont déterminées à partir d'au moins un des types d'informations suivants :
une disponibilité de réseau pour le premier dispositif d'utilisateur,
une capacité du premier dispositif d'utilisateur en fonction d'un type de dispositif du premier dispositif d'utilisateur,
la détermination de deuxièmes informations contextuelles en relation avec l'autre dispositif d'utilisateur, où les deuxièmes informations contextuelles sont déterminées à partir d'au moins un des types d'informations suivants :
une disponibilité de réseau pour l'autre dispositif d'utilisateur,
une capacité de l'autre dispositif d'utilisateur en fonction d'un type de dispositif de l'autre dispositif d'utilisateur, et
pour chacun des au moins un mode de communication, la détermination de l'indicateur d'adéquation au moyen des premières et deuxièmes informations contextuelles, de sorte que, par l'utilisation des informations contextuelles pour à la fois le premier dispositif d'utilisateur et l'autre dispositif d'utilisateur, un mode de communication adéquat entre ceux-ci peut être déterminé.

2. Le procédé selon la Revendication 1 comprenant en outre :
la détermination d'un premier indicateur d'adéquation à partir des premières informations contextuelles relatives au premier dispositif d'utilisateur,
la détermination d'un deuxième indicateur d'adéquation à partir des deuxièmes informations contextuelles relatives à l'autre dispositif d'utilisateur, et
la sélection de l'indicateur pour chaque mode de communication parmi les premier et deuxième indicateurs d'adéquation.

3. Le procédé selon la Revendication 2 où les premier et deuxième indicateurs d'adéquation sont déterminés au moyen d'une table de préférences reliant des indicateurs d'adéquation à différents types d'informations contextuelles en relation avec une pluralité de modes de communication.

4. Le procédé selon la Revendication 2 ou 3 où l'indicateur est sélectionné par :
le classement de chacun des premier et deuxième indicateurs d'adéquation selon une hiérarchie prédéterminée en fonction d'un critère prédéterminé, et
le choix de l'indicateur parmi les indicateurs d'adéquation qui possède le classement le plus bas.

5. Le procédé selon l'une quelconque des Revendications précédentes où l'opération de détermination des premières informations contextuelles est exécutée après l'identification d'une demande d'établissement d'une communication par un utilisateur du premier dispositif d'utilisateur vers l'autre dispositif d'utilisateur, le procédé comprenant en outre :
la transmission des premières informations contextuelles à l'autre dispositif d'utilisateur au cours d'une procédure d'établissement d'appel, de sorte que les informations contextuelles soient utilisables par l'utilisateur de l'autre dispositif d'utilisateur dans la détermination d'un objectif de la demande de communication.

6. Le procédé selon l'une quelconque des Revendications précédentes comprenant en outre :
l'association d'un nombre de dispositifs de la pluralité de dispositifs d'utilisateur sous la forme d'une collection,
la sélection d'un dispositif du nombre de dispositifs d'utilisateur en tant que dispositif représentatif de la collection,
la définition d'un ou de plusieurs champs d'informations contextuelles relatifs à la collection et l'association des un ou plusieurs champs au dispositif d'utilisateur représentatif, et
l'utilisation du dispositif d'utilisateur représentatif de façon à communiquer les champs d'informations contextuelles à d'autres dispositifs.

7. Le procédé selon l'une quelconque des Revendications précédentes comprenant en outre :
la surveillance d'un échéancier associé au premier dispositif d'utilisateur,
après la suppression d'une téléconférence planifiée, la détermination d'un ou de plusieurs participants de la téléconférence planifiée,
la détermination d'un numéro de téléphone de contact relatif à chacun des participants, et
la fourniture des numéros de téléphone de contact à un moyen d'établissement d'appel afin d'établir la téléconférence entre le premier dispositif d'utilisateur et les un ou plusieurs participants.

8. Le procédé selon l'une quelconque des Revendications précédentes comprenant en outre :
la surveillance de communications à commutation de circuits dans lesquelles le premier dispositif d'utilisateur est engagé, et
après la détection d'une terminaison de communication qui n'est pas initiée par un utilisateur du premier dispositif d'utilisateur et/ou l'autre participant et les autres participants à la communication, la notification d'un moyen d'établissement d'appel afin de ré-établir la communication.

9. Un gestionnaire client de présence configuré pour une utilisation avec un premier dispositif pouvant communiquer avec un réseau de télécommunications mobile, le gestionnaire client de présence comprenant :
une base de données d'utilisateurs associée à un utilisateur du premier dispositif,
un moteur de traitement configuré de façon à déterminer des premières informations contextuelles relatives au premier dispositif, où les premières informations contextuelles sont déterminées parmi au moins un des types d'informations suivants :
une disponibilité de réseau pour le premier dispositif,
une capacité du premier dispositif en fonction d'un type de dispositif du premier dispositif,
une interface configurée de façon à recevoir des deuxièmes informations contextuelles relatives à un autre dispositif d'un utilisateur associé, où les deuxièmes informations contextuelles sont déterminées parmi au moins un des types d'informations suivants :
une disponibilité de réseau pour l'autre dispositif,
une capacité de l'autre dispositif en fonction d'un type de dispositif de l'autre dispositif, et
le moteur de traitement est configuré en outre de façon à déterminer un indicateur d'adéquation concernant une adéquation d'au moins un mode de communication entre le premier dispositif et l'autre dispositif, au moyen des premières et deuxièmes informations contextuelles, de sorte que par l'utilisation des informations contextuelles pour à la fois le premier dispositif et l'autre dispositif, un mode de communication adéquat entre ceux-ci puisse être déterminé.

10. Le gestionnaire client de présence selon la Revendication 9 où le moteur de traitement est configuré en outre de façon à :
déterminer un premier indicateur d'adéquation à partir des premières informations contextuelles,
déterminer un deuxième indicateur d'adéquation à partir des deuxièmes informations contextuelles, et
sélectionner l'indicateur pour chaque mode de communication à partir des premier et deuxième indicateurs d'adéquation.

11. Le gestionnaire client de présence selon l'une quelconque des Revendications 9 ou 10, où la base de données d'utilisateurs comprend au moins une entité sélectionnée dans un groupe comprenant des personnes, des animaux, des plantes, des objets inanimés statiques, des objets inanimés déplaçables, des objets inanimés mobiles et des collections de telles entités.

12. Le gestionnaire client de présence selon l'une quelconque des Revendications 9 à 11 où le moteur de traitement est configuré de façon à :
obtenir des informations d'état relatives à un utilisateur du dispositif, et
utiliser les informations d'état de façon à fournir des informations contextuelles personnalisées relatives à l'emplacement, à la disponibilité et/ou à des capacités de l'utilisateur.

13. Le gestionnaire client de présence selon la Revendication 12 comprenant en outre l'obtention des informations d'état au moyen d'au moins une des sources suivantes :
a) des ressources sur le dispositif,
b) des ressources de réseau, et/ou
c) un moyen d'entrée d'utilisateur.

14. Le gestionnaire client de présence selon la Revendication 13 où les ressources sur le dispositif comprennent au moins un élément parmi :
a) un calendrier,
b) un échéancier d'utilisateur, et/ou
c) une base de données associant des positions d'utilisateur prédéterminées à une ou plusieurs descriptions personnalisées.

15. Le gestionnaire client de présence selon l'une quelconque des Revendications 12 à 14 où les informations d'état déterminées par le moteur de traitement comprennent des données de position, et les informations d'utilisateur personnalisées que le moteur de traitement est configuré de façon à fournir comprennent un ou plusieurs éléments parmi les suivants :
a) une description d'emplacement personnel des données de position,
b) une description d'emplacement régional ou spatial des données de position,
c) une description d'emplacement spatial relatif des données de position,
d) un emplacement basé sur un échéancier d'utilisateur décrit en relation avec les données de position,
e) une description de fuseau horaire en relation avec les données de position,
f) une description d'emplacement environnemental des données de position
g) un emplacement réel de l'utilisateur,
h) un emplacement de l'utilisateur en relation avec un utilisateur associé, et/ou
i) une expression logique en relation avec l'emplacement réel de l'utilisateur.
